# EUROPEAN PATENT APPLICATION

(11) **EP 4 664 753 A1**
(43) Date of publication of application: **17.12.2025**
(21) Application number: 24855085.7
(22) Date of filing: 12.08.2024
(51) Int. Cl.: H02S 50/00, H04B 3/54, H04B 3/46, G09F 9/302, G09F 9/33, G09F 9/35

(54) **METHOD AND DEVICE FOR DISPLAYING INFORMATION ABOUT PHOTOVOLTAIC POWER GENERATION SYSTEM**

(30) Priority: 30.04.2024 KR 20240057639
(71) Applicant: Hanwha Solutions Corporation, Jung-gu Seoul 04541 (KR)
(72) Inventor: KIM, Mi So, Seoul 04541 (KR); YUN, Ju Hwan, Seoul 04541 (KR); LEE, Su Chang, Seoul 04541 (KR); WOO, Jeong Hun, Seoul 04541 (KR); LEE, Jae Dong, Seoul 04541 (KR); SHIN, Seung Woo, Seoul 04541 (KR)
(74) Representative: Mooser, Sebastian Thomas
(86) International application number: PCT/KR2024/012006
(87) International publication number: WO 2025/230046

(57) **Abstract**

An apparatus according to an aspect includes a memory in which at least one program is stored, and at least one processor configured to execute the at least one program, wherein the at least one processor is configured to obtain data of each of a plurality of components included in the solar photovoltaic system by selectively using either power line communication or wireless communication, determine at least one of status information or error information of each of the components based on the data, and output at least one of the status information or the error information using at least one of a flexible numeric display (FND) or a dot matrix.

## Description

### Technical Field

The present disclosure relates to a method and apparatus for displaying information of a solar photovoltaic system.

### Background Art

Recently, as interest in eco-friendly energy technology has increased, the deployment of solar photovoltaic systems has also grown.

For large-scale solar photovoltaic systems, it is inevitable that the solar photovoltaic systems are installed far from the sites where power obtained from solar photovoltaic generation is used.

In this case, there is an inconvenience of having to travel to the installation site of the solar photovoltaic system to directly check operational status information, power generation, communication status information, communication error information, or the like of the devices included in the photovoltaic system.

Further, in order to remotely check the information of the solar photovoltaic system, a separate communication apparatus, such as a mobile device, must be used, and when there are connection issues between the separate communication apparatus and the solar photovoltaic system, it becomes very difficult to determine an operational status of each of devices included in the solar photovoltaic system.

In the present disclosure, information of the solar photovoltaic system is provided to enable a user to obtain various pieces of information of the solar photovoltaic system and easily determine the status of the solar photovoltaic system without having to travel to the installation sites of solar power generation facilities.

### Description of Embodiments

### Technical Problem

The present disclosure is directed to providing a method and apparatus for displaying information of a solar photovoltaic system. Further, the present disclosure is also directed to providing a computer-readable recording medium having a program recorded thereon for a computer to execute the method. Technical problems to be solved are not limited to the aforementioned technical problems, and other technical problems not described above may be present.

### Technical Solution to Problem

One aspect of the present invention provides a method of displaying information of a solar photovoltaic system, the method including obtaining data of each of a plurality of components included in the solar photovoltaic system by selectively using either power line communication or wireless communication, determining at least one of status information or error information of each of the components based on the data, and outputting at least one of the status information or the error information using at least one of a flexible numeric display (FND) or a dot matrix.

Another aspect of the present invention provides an apparatus including a memory in which at least one program is stored, and at least one processor configured to execute the at least one program, wherein the at least one processor is configured to obtain data of each of a plurality of components included in the solar photovoltaic system by selectively using either power line communication or wireless communication, determine at least one of status information or error information of each of the components based on the data, and output at least one of the status information or the error information using at least one of a flexible numeric display (FND) or a dot matrix.

A computer-readable recording medium according to another aspect of the present disclosure includes a recording medium having a program for executing the methods described above on a computer.

### Advantageous Effects

A user can remotely check a real-time status and information of each of various devices included in a solar photovoltaic system through a display.

Further, the user can easily manage various devices included in the solar photovoltaic system in response to the real-time status of the solar photovoltaic system.

Further, by providing the user with a screen displaying abnormalities of the devices included in the solar photovoltaic system, the user can quickly and effectively respond to the abnormalities of the devices.

Further, various pieces of information about the operational status of the devices included in the solar photovoltaic system can be provided to the user in the form of letters, numbers, and symbols, even without connecting a separate communication apparatus or accessing platforms such as the web or applications.

Further, the operational status of the devices included in the solar photovoltaic system can be displayed more diversely and intuitively using a display apparatus, specifically a flexible numeric display (FND) or dot matrix.

However, effects that may be achieved by the embodiments are not limited to the above-mentioned effects, and other effects that are not mentioned may be clearly understood by those skilled in the art from the following description.

### Description of Drawings

FIG. 1 is a view for describing an example of a method of displaying information of a solar photovoltaic system according to an embodiment.
FIG. 2 is a configuration diagram for describing an example of an apparatus that displays information of the solar photovoltaic system according to an embodiment.
FIG. 3 is a flowchart illustrating an example of the method of displaying information of the solar photovoltaic system according to an embodiment.
FIG. 4 is a flowchart illustrating an example of a method of selecting a communication method according to an embodiment.
FIG. 5 is a view for describing an example of an apparatus that outputs status information, according to an embodiment.
FIG. 6 is a view for describing another example of the apparatus that outputs status information, according to an embodiment.
FIG. 7 is a view for describing an example of a method of displaying status information of a module-level power electronics (MLPE) device according to an embodiment.
FIG. 8 is a view for describing an example of a method of outputting status information or information related to a determined error, according to an embodiment.
FIG. 9 is a view for describing an example of a method of outputting status information of the MLPE device according to an embodiment.
FIG. 10 is a view for describing an example of a method of displaying an operational status of the MLPE device by controlling a light-emitting diode/liquid crystal display (LED/LCD), according to an embodiment.

### Best Mode

The terms used in the embodiments have been selected from general terms that are currently widely used when possible but may vary according to an intention of those of ordinary skill in the art, precedents, or the emergence of new technologies. In addition, the applicant may arbitrarily select terms in a particular case, and in this case, the meaning of the terms will be described in detail in the corresponding part. Accordingly, the terms used herein should be defined on the basis of the meaning of the terms and the content throughout the specification, instead of the names of the terms.

### Mode for Invention

Throughout the specification, when a part is referred to "include" a certain component, it means that it may further include other components rather than exclude other components, unless specifically indicates otherwise. In addition, terms such as "~unit", "and "~module" described in the specification denote a unit that processes at least one function or operation, which may be implemented in hardware or software, or implemented in a combination of hardware and software.

In addition, terms including ordinal numbers such as "first" or "second" used herein may be used to describe various components, but the components are not limited by the terms, and the terms are used only for the purpose of distinguishing one component from another. These terms may be used for the purpose of distinguishing one component from another component.

Hereinafter, the present disclosure will be described in detail with reference to the accompanying drawings.

However, the embodiment may be implemented in several different forms and is not limited to embodiments that will be described below.

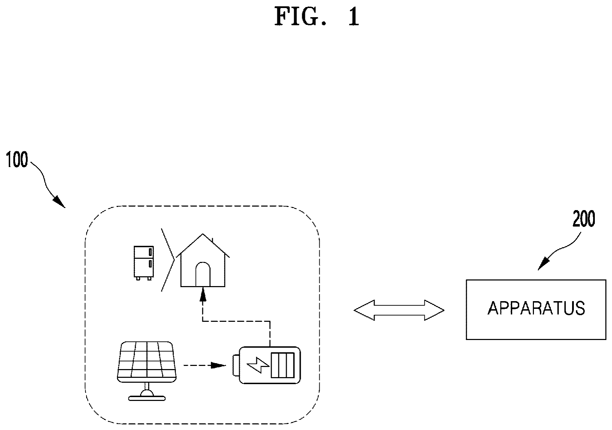

FIG. 1 is a view for describing an example of a method of displaying information of a solar photovoltaic system according to an embodiment.

Referring to FIG. 1, an apparatus 200 may display information about an operational status of at least one apparatus included in a solar photovoltaic system 100.

Here, although the apparatus 200 is illustrated as not being included in the solar photovoltaic system 100, the apparatus 200 may refer to any one of a plurality of devices included in the solar photovoltaic system 100, or may refer to a separate apparatus that is not included in the solar photovoltaic system 100.

Further, the apparatus 200 may refer to a portion of the configuration of the apparatus included in the solar photovoltaic system 100. Specifically, the apparatus 200 may refer to a portion of the configuration of a gateway included in the solar photovoltaic system 100. Here, the term "gateway" may refer to a communication device that collects information from hardware devices connected to the solar photovoltaic system and transmits the collected information to the internet and/or cloud, and may also refer to an apparatus that enables a module-level power electronics (MLPE) device and other devices in the solar photovoltaic system to communicate with the web or an application.

In some embodiments, the apparatus 200 may display operational status information of the MLPE device included in the solar photovoltaic system 100. Here, the MLPE device is a device that converts power at the module level, and may include a micro inverter and a direct current (DC) optimizer.

Thus, a user may check an operational status of the MLPE device through the apparatus 200 without a separate communication device, such as a mobile device.

In some embodiments, the user may obtain information of the solar photovoltaic system 100 remotely without having to move to a location in which the solar photovoltaic system 100 is installed. Further, the user may obtain information of an apparatus in which an anomaly has occurred and take appropriate action.

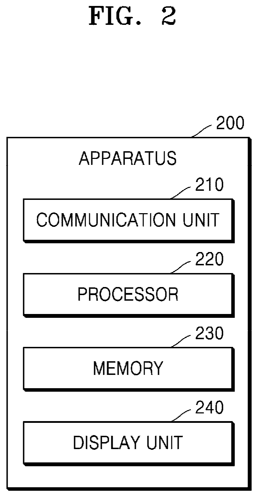

FIG. 2 is a configuration diagram for describing an example of the apparatus that provides information of the solar photovoltaic system according to an embodiment.

Referring to FIG. 2, an apparatus 200 that displays information of the solar photovoltaic system (hereinafter referred to as "apparatus") may include a communication unit 210, a processor 220, a memory 230, and a display unit 240. Only components of the apparatus 200 related to the embodiment are illustrated in FIG. 2. Thus, it is apparent to those skilled in the art that other general-purpose components may be further included in addition to the components illustrated in FIG. 2.

The communication unit 210 may include one or more components that enable wired or wireless communication with an external server or external apparatus. In some embodiments, the communication unit 210 may include a short-range communication unit (not shown) and a mobile communication unit (not shown) for communication with the external server or external apparatus.

The processor 220 controls the overall operation of the apparatus 200. In some embodiments, the processor 220 may generally control an input unit (not shown), a display (not shown), the communication unit 210, and the memory 230 by executing programs stored in the memory 230.

The processor 220 may be implemented using at least one of application-specific integrated circuits (ASICs), digital signal processors (DSPs), digital signal processing devices (DSPDs), programmable logic devices (PLDs), field-programmable gate arrays (FPGAs), controllers, micro-controllers, microprocessors, and electrical units for performing other functions.

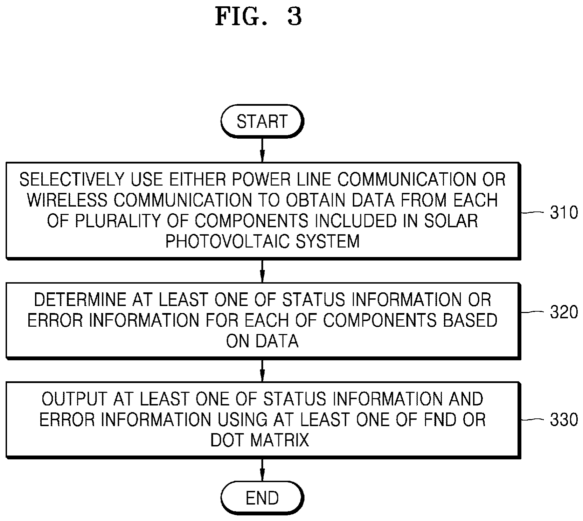

The processor 220 may control the operation of the apparatus 200 by executing programs stored in the memory 230. As an example, the processor 220 may perform at least a portion of a method of displaying information of the solar photovoltaic system described with reference to FIGS. 3 to 10.

The memory 230 is a hardware that stores various pieces of data processed within the apparatus 200 and may store programs for processing and controlling the processor 220.

In some embodiments, various pieces of data may be stored in the memory 230, including power information such as a power generation amount, temperature, a current power output, predicted power consumption, stored power, transferred power, and consumed power, weather information such as wind speed, rainfall, snowfall, and sunrise/sunset times, firmware update data, and data generated according to the operation of the processor 220. Further, the memory 230 may store an operating system (OS) and at least one program (e.g., a program required for the processor 220 to operate).

The memory 230 may include random access memory (RAM) such as dynamic random-access memory (DRAM) or static random-access memory (SRAM), read-only memory (ROM), electrically erasable programmable read-only memory (EEPROM), CD-ROM, Blu-ray or another optical disk storage, a hard disk drive (HDD), a solid-state drive (SSD), or a flash memory.

The display unit 240 may be hardware that displays various pieces of data processed within the apparatus 200.

In some embodiments, the display unit 240 may include a smartphone, a tablet personal computer (PC), a personal computer (PC), a smart television (TV), a media player, a navigation system, a kiosk, a wearable device, and the like.

Accordingly, the user may obtain current and past information as well as predicted information of the solar photovoltaic system through the display unit 240.

FIG. 3 is a flowchart illustrating an example of a method of displaying information of the solar photovoltaic system according to an embodiment.

Referring to FIG. 3, the method of displaying information of the solar photovoltaic system may include operations 310 to 330. However, the present disclosure is not limited thereto, and other general operations other than the operations illustrated in FIG. 3 may be further included in the method of displaying information of the solar photovoltaic system. Further, as described above with reference to FIGS. 1 and 2, at least one of the operations of the flowchart illustrated in FIG. 3 may be processed by the processor 220.

In operation 310, the processor 220 may selectively use either power line communication or wireless communication to obtain data from each of a plurality of components included in the solar photovoltaic system.

In some embodiments, the processor 220 may determine a communication condition based on the surrounding environment in which the solar photovoltaic system is located, and may select either the power line communication or the wireless communication based on the determined communication condition. Further, the processor 220 may determine the communication condition based on noise included in a signal according to either the power line communication or the wireless communication or a frequency of the signal, and may switch to either the power line communication or the wireless communication based on the determined communication condition.

In operation 320, the processor 220 may determine at least one of status information or error information for each of the components based on the data.

In some embodiments, the processor 220 may scan at least one MLPE device included in the solar photovoltaic system and extract status information of the MLPE. Here, the status information of the MLPE device may include at least one of the number of all MLPE devices connected to the gateway, a communication status between the gateway or the MLPE device, and an operational status of the MLPE device.

Further, the processor 220 may determine an error in each of the components based on the data. In some embodiments, the processor 220 may determine an error in the MLPE device or gateway included in the solar photovoltaic system using at least one sensor. As an example, the processor 220 may determine an error in the MLPE device by detecting that a grid frequency or a grid voltage exceeds a normal operating range. As another example, the processor 220 may detect a response time of the power line communication, and determine an error in the gateway when the response time is greater than or equal to a predetermined period of time.

Further, the processor 220 may determine an error in each of the components based on data received from a server or cloud through the communication unit 210, or data obtained by communicating with the web or an application.

In some embodiments, the processor 220 may determine the error by comparing whether information obtained from the MLPE device or gateway is the same as information stored in an external database, such as a server or cloud. Here, the information stored in the external database may include, but is not limited to, a serial number, a firmware version, and the like of the MLPE or gateway.

In some embodiments, the processor 220 may determine an error by comparing whether the information obtained from the MLPE device or gateway is the same as information set by a user on the web or application.

In some embodiments, the processor 220 may determine an error when the number of MLPE devices included in the solar photovoltaic system set by the user is different from the number of MLPE devices that the processor 220 has scanned and obtained. Here, the information set by the user on the web or application is not limited to the number of MLPE devices and may include various settings related to the operation of the MLPE device or gateway.

In operation 330, the processor 220 may output at least one of the status information or the information related to the determined error. Here, the status information may be output using either an FND or a dot matrix.

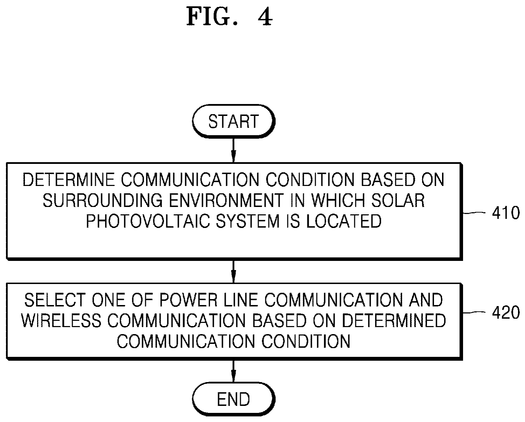

FIG. 4 is a flowchart illustrating an example of a method of selecting a communication method according to an embodiment.

Hereinafter, an example of the method of selecting a communication method by the processor 220 will be described with reference to FIG. 4.

Referring to FIG. 4, in operation 410, the processor 220 determines a communication condition based on the surrounding environment in which the solar photovoltaic system is located.

Further, in operation 420, the processor 220 may select either power line communication or wireless communication based on the determined communication condition.

In some embodiments, the processor 220 may determine the communication condition based on the surrounding environment of a location in which the solar photovoltaic system is installed. Thus, the processor 220 may determine a suitable communication method between the power line communication and the wireless communication based on the surrounding environment in which the solar photovoltaic system is located.

As an example, the processor 220 may determine that the power line communication method is a suitable communication method based on a surrounding environment that interferes with wireless communication.

In some embodiments, in cases where there are obstacles such as thick walls or trees that interfere with communication, wireless communication may become difficult, and the processor 220 may determine that the power line communication method is a suitable communication method. Further, when it is determined that the communication condition involves devices using the same public frequency band, wireless communication may become difficult, and the processor 220 may determine that the power line communication method is a suitable communication method.

As another example, the processor 220 may determine that the wireless communication method is a suitable communication method based on a surrounding environment that interferes with power line communication.

In some embodiments, in cases where there is excessive noise due to other electronic devices using the same power line communication network, the power line communication may become difficult, and the processor 220 may determine that the wireless communication method is a suitable communication method. In addition, in cases where there is significant attenuation of frequency due to other network devices using the same power line communication network, the power line communication may become difficult, and the processor 220 may determine that the wireless communication method is a suitable communication method.

In some embodiments, the processor 220 may determine the communication condition based on noise included in a signal according to either the power line communication or the wireless communication or a frequency of the signal, and may switch to either the power line communication or the wireless communication based on the determined communication condition.

As an example, even when the processor 220 has determined that the power line communication method is suitable, and is already communicating using the power line communication method, the processor may switch the communication method to the wireless communication method by determining that the communication condition hinders the power line communication.

In some embodiments, even when the processor 220 is communicating using the power line communication, when noise caused by other electronic devices using the same power line communication network is large or when there is significant frequency attenuation caused by other network devices, the processor 220 may determine that the communication condition hinders the power line communication and switch the communication method to the wireless communication method.

As another example, even when the processor 220 has determined that the wireless communication method is suitable and is already communicating using the wireless communication method, the processor may switch the communication method to the power line communication method by determining that the communication condition hinders the wireless communication.

In some embodiments, even when the processor 220 is communicating using the wireless communication method, the processor 220 may switch the communication method to the power line communication method by determining that the communication condition involves obstacles that interfere with the communication or devices using the same public frequency band.

Thus, the processor 220 may selectively use either the power line communication or the wireless communication to obtain data from each of the plurality of components included in the solar photovoltaic system. Here, the plurality of components included in the solar photovoltaic system may include an MLPE device, a gateway, a photovoltaic module, a load, a grid, and an energy storage system (ESS).

In some embodiments, the processor 220 may extract status information for each of the components based on the obtained data. In other words, the processor 220 may scan at least one MLPE device included in the solar photovoltaic system and extract status information of the MLPE device.

Here, the operation of scanning the MLPE device may refer to connecting the MLPE device to the gateway, and the information of the MLPE device may be obtained through the scanning operation. In addition, the status information of the MLPE device may include at least one of the number of all MLPE devices connected to the gateway, a communication status between the gateway or the MLPE device, or an operational status of the MLPE device.

In some embodiments, the processor 220 may obtain operational status data of the gateway, operational status data of the MLPE device, error data of the gateway and the MLPE device, and the like.

In some embodiments, the processor 220 may obtain data or information, such as whether power is applied to the gateway, a communication status between the gateway and the communication unit 210, a communication status between the gateway and the MLPE device, a progress of the gateway's initialization, an operational status of scanning the MLPE device of the gateway, an error in the gateway, and the like.

Further, the processor 220 may scan the MLPE device to obtain data or information, such as the number of MLPE devices connected to the gateway, a power generation amount of the MLPE devices connected to the gateway, a serial number of each of the MLPE devices connected to the gateway, an error in the MLPE device connected to the gateway, and an operational status of the MLPE device, and the like.

In some embodiments, the processor 220 may determine an error in each of the components based on the data. In addition, the processor 220 may determine an error in the MLPE device or gateway included in the solar photovoltaic system using at least one sensor. Here, the sensor may include a voltage sensor, a current sensor, a temperature sensor, a communication sensor, and the like, but the present disclosure is not limited thereto.

As an example, the processor 220 may determine an error in the MLPE device by sensing an abnormal operation of the MLPE device.

In some embodiments, the processor 220 may determine an error in the MLPE device by detecting an abnormal voltage due to a component failure in the MLPE device. Further, the processor 220 may determine an error in the MLPE device by detecting an increase in temperature due to ambient temperature or high power output, and ambient temperature or temperature sensor malfunction. In addition, the processor 220 may determine an error in the MLPE device by detecting that a grid frequency or a grid voltage exceeds a normal operating range. Further, the processor 220 may determine an error in the MLPE device by detecting malfunctions of a micro control unit (MCU).

As another example, the processor 220 may determine an error in the gateway by sensing an abnormal operation of the gateway.

In some embodiments, the processor 220 may detect a response time of the power line communication, and determine an error in the gateway when the response time is greater than or equal to a predetermined period of time. Further, the processor 220 may determine an error in the gateway by detecting that a measured voltage or current exceeds a normal range. In addition, the processor 220 may determine an error in the gateway by detecting a failure in the firmware update.

Accordingly, the processor 220 may output the status information or information related to the determined error. In addition, the status information may be output using either an FND or a dot matrix.

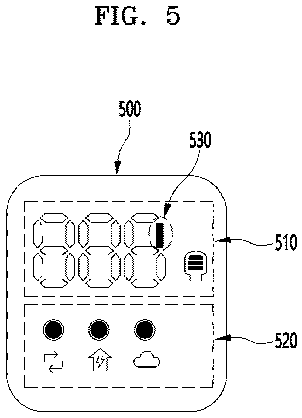

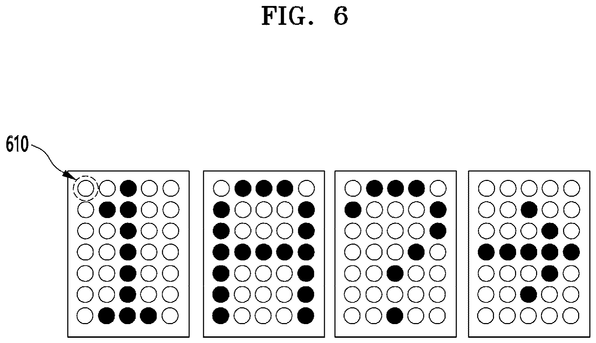

FIG. 5 is a view for describing an example of an apparatus that outputs status information, according to an embodiment. FIG. 6 is a view for describing another example of the apparatus that outputs status information, according to an embodiment.

Hereinafter, with reference to FIGS. 5 and 6, examples of the apparatus through which the processor 220 outputs status information will be described.

First, referring to FIG. 5, the processor 220 may output status information or information related to errors using an output apparatus 500.

In some embodiments, the output apparatus 500 may include an FND 510 and a light-emitting diode/liquid crystal display (LED/LCD) 520, and the processor 220 may display status information or information related to errors using the FND 510 or the LED/LCD 520. Here, the FND 510, also known as a seven-segment display, may refer to a display apparatus composed of seven line segments 530 and may display numbers, letters, and the like according to the state of each of the line segments 530. Further, for convenience of description, only a total of 21 line segments 530 are illustrated in FIG. 5, but the present disclosure is not limited thereto.

Accordingly, the processor 220 may display status or error information by controlling the operation (e.g., on/off operation) of each of the line segments 530 each composed of LED/LCD to generate a letter or number form.

In some embodiments, the processor 220 may display the operational status of the MLPE device by controlling the operation of the LED/LCD 520. Here, the operation of the LED/LCD 520 may include color changes and blinking, and specific examples of displaying the operational status of the MLPE device by controlling the LED/LCD 520 will be described below.

Referring to FIG. 6, the processor 220 may display status information or information related to errors using a dot matrix. Here, the term "dot matrix" may refer to a display apparatus that may represent characters, symbols, or images using a plurality of dot-shaped LEDs/LCDs.

In some embodiments, the processor 220 may display numbers, characters, and symbols using the LED/LCD of each of dots 610 included in the dot matrix.

In some embodiments, the processor 220 may provide status or error information to the user by controlling the power on/off, color change, and blinking of each of the dots 610 to form various shapes, characters, symbols, and the like.

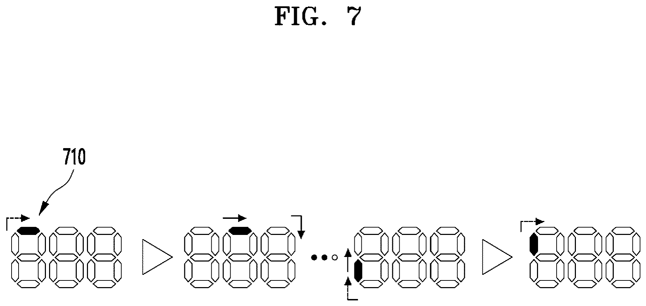

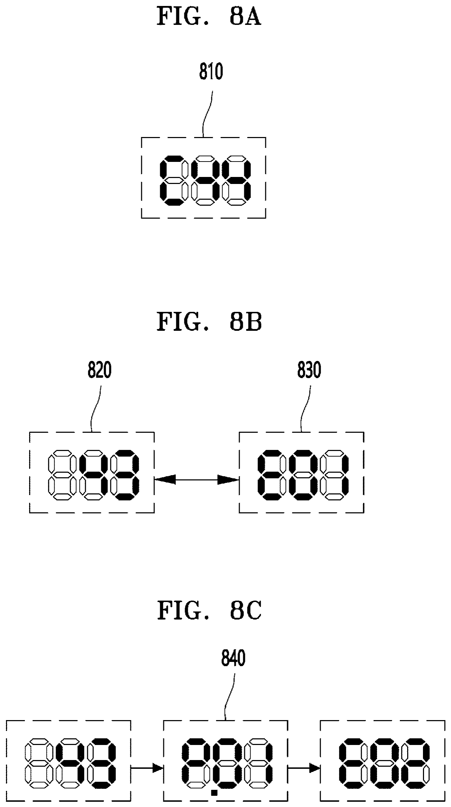

FIG. 7 is a view for describing an example of the method of displaying status information of the MLPE device according to an embodiment. FIG. 8 is a view for describing an example of a method of outputting status information or information related to a determined error, according to an embodiment. Specifically, FIG. 8A is a view illustrating the display of a basic state of the MLPE device, FIG. 8B is a view illustrating the display of error information of the MLPE device, and FIG. 8C is a view illustrating the display of power generation information of the MLPE device.

Hereinafter, an example of the method of outputting status information of the MLPE device or information related to errors using the above-described FND by the processor 220 will be described with reference to FIGS. 7 and 8.

First, referring to FIG. 7, the processor 220 may display the status information of the MLPE device by continuously changing active line segments 710 among line segments included in the FND.

In some embodiments, the processor 220 may display the operating state of the MLPE device by controlling the operation of each of the line segments 710. In other words, the processor 220 may display the status information of the MLPE device by continuously changing the active line segments 710 to indicate that the MLPE device is in a powered-on state.

In addition, referring to FIG. 8, the processor 220 may display a basic state of the MLPE device.

In some embodiments, the processor 220 may display an identification number 810 of the MLPE device currently connected to the gateway. Specifically, the processor 220 may scan the MLPE device and, upon completion of the scan, output the letter C (complete), indicating that the operation is finished, along with an identification number of the scanned MLPE device. Here, the operation may refer not only to the scanning operation but also to all operations of the MLPE device.

Further, the processor 220 may display error information of the MLPE device.

In some embodiments, the processor 220 may display an identification number 820 of the MLPE device in which an error exists, and may subsequently display error information 830. Specifically, the processor 220 may output the letter E (error) indicating that an error exists, along with an error code. Here, the error code may be displayed as a different number depending on the type of error.

Further, the processor 220 may display power generation information of the MLPE device.

In some embodiments, the processor 220 may display the identification number of the MLPE device and then display power generation amount information 840 of the displayed MLPE device. Specifically, the processor 220 may output the letter P (power), indicating that the power generation amount is being displayed, along with the power generation amount. Here, the power generation amount may be displayed in units of kW, and may also be displayed in larger units depending on the number of FNDs.

Further, when the power generation amount displayed in the power generation amount information 840 falls outside a normal power generation amount range, the processor 220 may display the identification number of the MLPE device, display the power generation amount information 840 of the displayed MLPE device, and then display the error information.

As a further example, the processor 220 may display the number of connected MLPE devices.

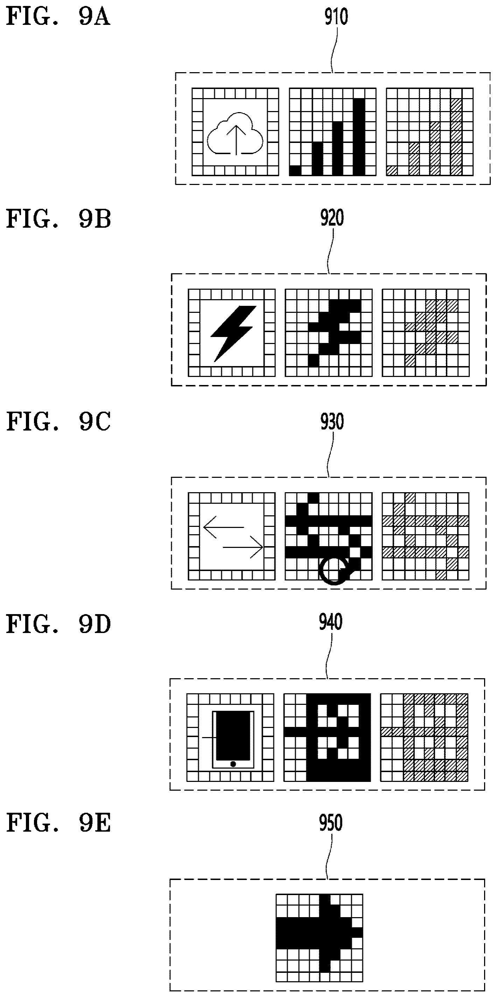

FIG. 9 is a view for describing an example of a method of generating symbols and outputting status information of the MLPE device according to an embodiment. Specifically, FIG. 9A is a view illustrating the display of a strength of a communication signal, FIG. 9B is a view illustrating the display of a power generation status of the MLPE device, FIG. 9C is a view illustrating the display of a communication status of the MLPE device, FIG. 9D is a view illustrating the display of an access point mode, and FIG. 9E is a view illustrating the display of an operation progress status of the MLPE device.

Hereinafter, an example in which the processor 220 displays the status information of the MLPE device using a dot matrix will be described with reference to FIG. 9.

Referring to FIG. 9, the processor 220 may generate symbols using a dot matrix and may display status information of the MLPE device through the color or shape of the generated symbols.

In some embodiments, the processor 220 may display the status information by varying the color, contrast, brightness, shape, an on/off state, and the like of each of dot matrices 910, 920, 930, 940, and 950.

In some embodiments, the processor 220 may display a strength of the communication signal of the MLPE device using the dot matrix 910. In other words, the processor 220 may measure a signal strength of the power line communication or wireless communication used by the MLPE device, and may display the measured signal strength differently for each strength.

Specifically, the processor 220 may divide the signal strength into a plurality of sections according to the signal strength, and may display the dot matrix 910 differently according to the section corresponding to the measured signal strength. That is, the processor 220 may display bars represented by the dot matrix 910 such that the size and number of the bars increase as the signal strength becomes stronger.

In some embodiments, the processor 220 may display a power generation status of the MLPE device using the dot matrix 920. In other words, the processor 220 may display whether the power generation status of the MLPE device is satisfactory. Here, whether the power generation status of the MLPE device is satisfactory may be determined by using a difference between an expected power generation amount and a current power generation amount. In addition, although not shown in the drawing, the processor 220 may display the power generation status of the MLPE device by outputting the current power generation amount.

In some embodiments, the processor 220 may display a communication status of the MLPE device using the dot matrix 930. In other words, the processor 220 may display whether a communication status between the MLPE device and the apparatus included in the solar photovoltaic system is good. Further, although not shown in the drawing, the processor 220 may assign a score to the communication status and may display the communication status by outputting the assigned communication score.

In some embodiments, the processor 220 may display an access point mode using the dot matrix 940. Here, the access point mode (AP mode) may refer to a mode that enables the transmission and reception of signals between a wireless LAN card of the MLPE device or gateway and another wireless LAN card. Accordingly, the processor 220 may display the dot matrix 940 differently depending on whether the mode is set to the access point mode. Further, the processor 220 may display whether the access point mode is operating normally or abnormally by expressing the color, contrast, brightness, or the like of the dot matrix 940 differently to indicate whether the access point mode is operating normally.

In some embodiments, the processor 220 may display an operation progress status of the MLPE device using the dot matrix 950. In other words, the processor 220 may display a progress status of the operations performed by the MLPE device, and the progress status may be displayed by varying the size of an arrow, changing the color of the arrow, or showing a progress rate.

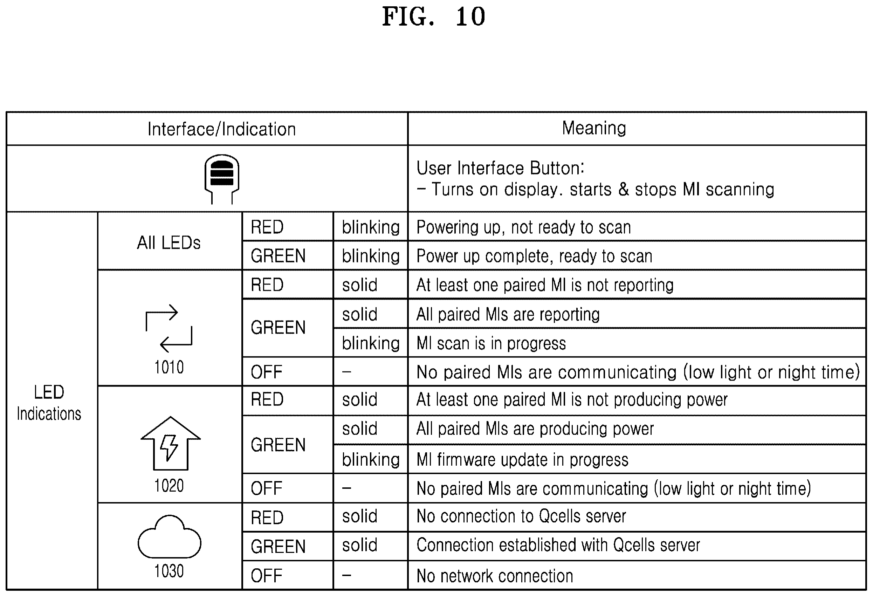

FIG. 10 is a view for describing an example of a method of displaying an operational status of the MLPE device by controlling an LED/LCD, according to an embodiment.

Hereinafter, an example of a method in which the processor 220 displays the operational status of the MLPE device using LEDs/LCDs 1010, 1020, and 1030 will be described with reference to FIG. 10.

Referring to FIG. 10, the processor 220 may display the operational status of the MLPE device by controlling the color, blinking, and or the like of each of the LEDs/LCDs 1010, 1020, and 1030.

In some embodiments, the processor 220 may display operational statuses of the MLPE device, such as whether the MLPE device is powered on or off, whether the MLPE device is ready to scan, a connection status of the gateway and the MLPE device, whether the MLPE device is producing power, the presence of any MLPE device that is not producing power, whether a firmware update is in progress, or a communication status with the server, by controlling the color changes or blinking of the LEDs/LCDs 1010, 1020, and 1030.

In some embodiments, the processor 220 may display that the MLPE device is in a powered-on state and is ready to scan, by expressing the colors of all the LEDs/LCDs 1010, 1020, and 1030 in green and controlling the LEDs/LCDs 1010, 1020, and 1030 to blink.

Further, the processor 220 may display a state, in which at least one MLPE device is not connected to the gateway, by expressing the color of a first LED/LCD 1010 in red and controlling the first LED/LCD 1010 not to blink.

Further, the processor 220 may display a state, in which the firmware of the MLPE device is being updated, by expressing the color of a second LED/LCD 1020 in green and controlling the second LED/LCD 1020 to blink.

Further, the processor 220 may display a state, in which the MLPE device is not connected to the server, by expressing the color of a third LED/LCD 1030 in red and controlling the third LED/LCD 1030 not to blink.

For convenience of description and understanding, only a portion of what is illustrated in FIG. 10 has been described, but it will be appreciated that the remainder may be understood as described.

The above-described method may be recorded as a program that may be executed on a computer, and may be implemented in a general-purpose digital computer operating the program using a computer-readable recording medium. In addition, the structure of the data used in the method described above may be recorded on a computer-readable recording medium through various means. Examples of the computer-readable recording medium include storage media such as magnetic storage media (e.g., ROM, floppy disks, hard disks, and the like), and optical read media (e.g., CD-ROMs, DVDs, and the like).

It will be understood by those skilled in the art to which the present embodiment pertains that the present disclosure may be implemented in modified forms without departing from the spirit and scope of the present disclosure. Therefore, the disclosed embodiments should be considered in descriptive sense only and not for purposes of limitation, and the scope of the rights is defined by the appended claims and should not be construed as limited to the foregoing description but should be interpreted to include all variations within an equivalent scope.

## Claims

1. A method of displaying information of a solar photovoltaic system, the method comprising:
obtaining data of each of a plurality of components included in the solar photovoltaic system by selectively using either power line communication or wireless communication;
determining at least one of status information or error information of each of the components based on the data; and
outputting at least one of the status information or the error information using at least one of a flexible numeric display (FND) or a dot matrix.

2. The method of claim 1, wherein the obtaining includes:
determining a communication condition based on a surrounding environment in which the solar photovoltaic system is located; and
selecting either the power line communication or the wireless communication based on the determined communication condition.

3. The method of claim 1, wherein the obtaining includes:
determining a communication condition based on noise included in a signal according to either the power line communication or the wireless communication or a frequency of the signal; and
switching to either the power line communication or the wireless communication based on the determined communication condition.

4. The method of claim 1, wherein the determining includes:
scanning at least one module-level power electronic device included in the solar photovoltaic system; and
determining status information of the module-level power electronic device,
wherein the status information of the module-level power electronic device includes at least one of a number of all module-level power electronic devices connected to a gateway, a communication status between the gateway and the module-level power electronic device, or an operational status of the module-level power electronic device.

5. The method of claim 1, wherein,
in the determining,
an error in an module-level power electronic device or a gateway included in the solar photovoltaic system is determined using at least one sensor.

6. The method of claim 5, wherein
in the determining,
the error in the module-level power electronic device is determined by detecting that a grid frequency or a grid voltage exceeds a normal operating range.

7. The method of claim 5, wherein
in the determining,
a response time of the power line communication is detected, and the error in the gateway is determined when the response time is greater than or equal to a predetermined period of time.

8. A computer-readable recording medium having recorded thereon a program for a computer to cause the method of claim 1 to be executed.

9. An apparatus configured to display information of a solar photovoltaic system, the apparatus comprising:
a memory in which at least one program is stored; and
at least one processor configured to execute the at least one program,
wherein the at least one processor is further configured to:
obtain data of each of a plurality of components included in the solar photovoltaic system by selectively using either power line communication or wireless communication;
determine at least one of status information or error information of each of the components based on the data; and
output at least one of the status information or the error information by using at least one of a flexible numeric display (FND) or a dot matrix.

10. The apparatus of claim 9, wherein the at least one processor is further configured to:
determine a communication condition based on a surrounding environment in which the solar photovoltaic system is located; and
select either the power line communication or the wireless communication based on the determined communication condition.

11. The apparatus of claim 9, wherein the at least one processor is further configured to:
determine a communication condition based on noise included in a signal according to either the power line communication or the wireless communication or a frequency of the signal; and
switch to either the power line communication or the wireless communication based on the determined communication condition.

12. The apparatus of claim 9, wherein the at least one processor is further configured to:
scan at least one module-level power electronic device included in the solar photovoltaic system; and
determine status information of the module-level power electronic device,
wherein the status information of the module-level power electronic device includes at least one of a number of all module-level power electronic devices connected to a gateway, a communication status between the gateway and the module-level power electronic device, or an operational status of the module-level power electronic device.

13. The apparatus of claim 9, wherein the at least one processor is further configured to determine an error in an module-level power electronic device or a gateway included in the solar photovoltaic system by using at least one sensor.

14. The apparatus of claim 13, wherein the at least one processor is further configured to determine the error in the module-level power electronic device by detecting that a grid frequency or a grid voltage exceeds a normal operating range.

15. The apparatus of claim 13, wherein the at least one processor is further configured to detect a response time of the power line communication, and determine the error in the gateway when the response time is greater than or equal to a predetermined period of time.
